# EUROPEAN PATENT SPECIFICATION

(11) **EP 1 478 161 B1**
(45) Date of publication and mention of the grant of the patent: **22.03.2006**
(21) Application number: 04010948.0
(22) Date of filing: 07.05.2004
(51) Int. Cl.: H04M 1/02, H05K 5/00

(54) **Case for mobile communication terminal**
Gehäuse für ein mobiles Endgerät
Boitier pour terminal mobile

(30) Priority: 12.05.2003 KR 2003029906
(43) Date of publication of application: 17.11.2004
(73) Proprietor: LG ELECTRONICS INC., Seoul (KR)
(72) Inventor: Lee, Choong Jae, Euiwang, Gyeonggi-do (KR)
(74) Representative: von Hellfeld, Axel

(56) References cited:
- EP-A- 0 881 867
- DE-U- 7 817 434
- US-A- 4 759 466
- US-A- 5 475 566
- US-A- 6 111 760

## Description

### Background of the Invention

### 1. Field of the Invention

The present invention relates to a mobile communication terminal, and, more particularly, to a case for a mobile communication terminal.

### 2. Description of Related Art

A mobile communication terminal (hereinafter, referred to as 'terminal') is a portable device by which voice, message and image information can be transmitted/received through a wireless medium. Recently, terminals having multimedia function besides the simple voice transmitting/receiving function are being developed.

As mobile communication service and manufacturing technology improve, terminals have become smaller in size. Furthermore, many terminals are now constructed as a folding type mobile terminal, which offers the advantages of larger display screens and better ergonomics with respect to use and portability. Currently, many terminals, including the folding-type, utilize liquid crystal display (LCD) screens for display purposes. In order to protect the LCD screens, the screens are installed on the inner side of one of the folding members of the terminal. However, as terminals and terminal components become smaller in size, display screens correspondingly grow in size. Furthermore, second display screens are now increasingly being offered, wherein the second screen is installed on the outer surface of the terminal opposite to the main display screen. Due to increasing compactness of terminals and growth of display screen size, terminals and display screens become more susceptible to damage or malfunction due to external impact, such as dropping.

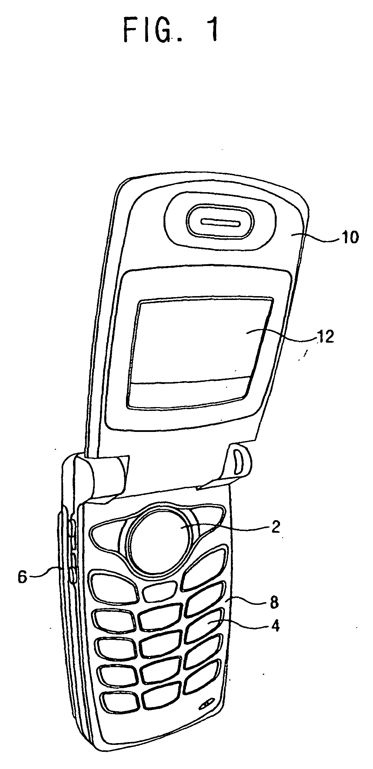

In Fig. 1, a conventional folding type terminal is shown, which includes a first folding member 8 that houses a plurality of terminal manipulation devices 4 on its inner surface, exemplified here as keys of a keypad. One particular key, the menu button 2, is shown also. A power source 6, shown here as a battery, is installed on the outer surface of the first member 8. The second folding member 10 is rotatably connected to the first member 8. A main display screen 12 is installed on the inner surface of the second member 10.

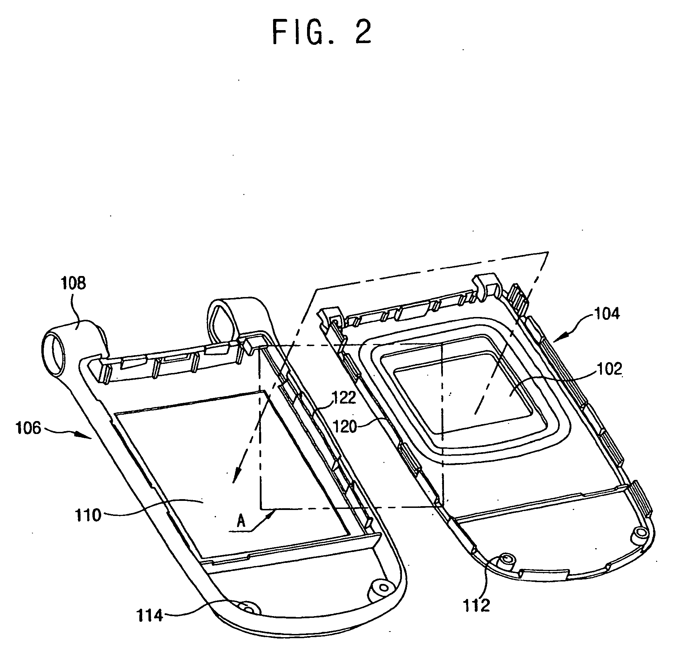

Referring to Fig. 2, an exploded perspective view of the second member 10 is shown. The second member 10 includes an upper case 104 housing a second display screen (not shown), wherein a user views information displayed in the second display screen through a display window 102. The upper case 104 couples to the lower case 106 to form the second member 10 via screws drawn through holes 112 in the upper case 104 and engage grooves 114 in the lower case 106. The lower case 106, which forms the inner surface of the second member 10, includes a hinge unit 108 to rotatably couple the second member 10 to the first member 8. The lower case 106 also includes a display window 110, through which a user views information displayed on the main display screen 12. Within Section A of Fig. 2 are support parts 120 and 122 for protecting the LCD screen and other circuitry housed in the second member 10.

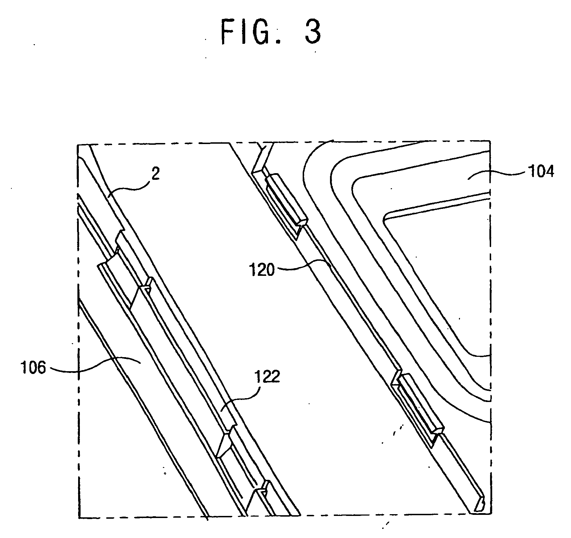

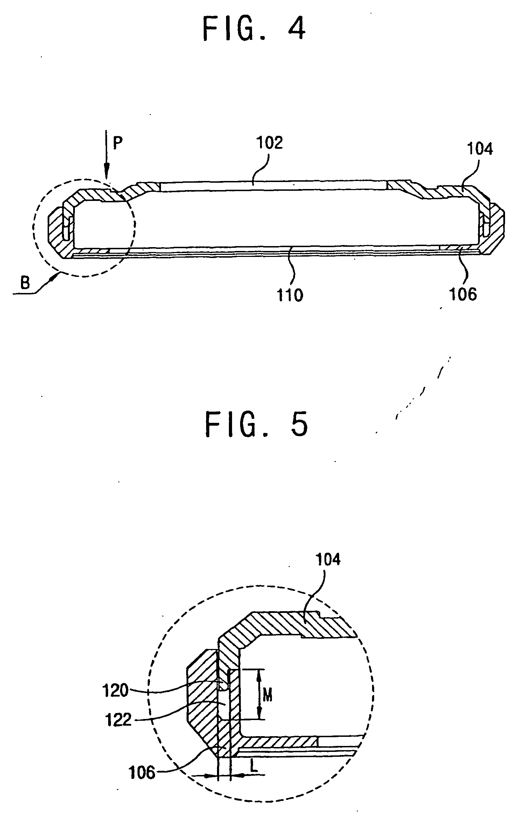

Fig. 3 is an enlarged view of the Section A in Fig. 2. In Fig. 3, the support part 120 is shown as a rib formed with a predetermined length at both edges of the upper case 104. The support part 122 is shown as a slot formed at both edges of the lower case 106 and receives the support rib 120. Fig. 4 illustrates a sectional view of the second member 10, wherein the upper and lower cases are coupled. Also shown in Fig. 4 is the impact force P, which is applied vertically to the surface of the upper case 104, as shown by the direction arrow.

Section B in Fig. 4, which is enlarged in Fig. 5, illustrates the sectional view of the support rib 120 engaging the support slot 122. The width L of the support slot 122 is often very small, generally less than 1 mm. The depth M of the support slot 122 is generally greater than three times the width L. The difference is size between M and L allows for elasticity when the terminal is compressed by the force P. However, when the upper and lower cases 104, 106 are manufactured, which is often by injection molding of polymers, the support ribs and slots 120, 122 must be formed to small and exact measurements. Due to the long and narrow formation of the support ribs and slots 120 and 122, respectively, they are fragile in construction and are easily damaged during fabrication, thereby increasing the cost of manufacturing.

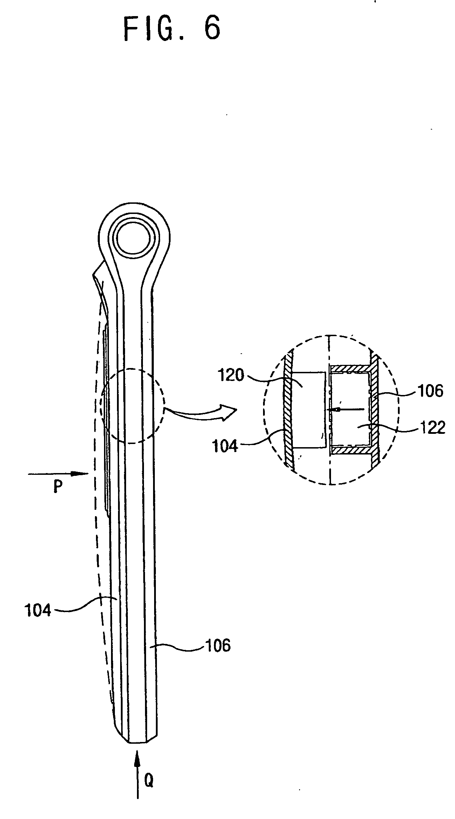

Fig. 6 illustrates a cross-sectional view of the conventional folding type terminal from the side, wherein a force Q is applied to the terminal in the direction signified by the arrow. In this case, the benefits provided by the arrangement of the support slots and ribs 120, 122 do not apply. The force Q would deform the terminal so that the upper case 104 of the second member 10 would be bent outwardly and the support rib 120 would be disengaged from the support slot 122. Consequently, the upper case 104 would be decoupled from the lower case 106 and a gap therebetween would be created.

EP 0 881 867 A2 discloses a clamshell housing for a portable device such as a telephone, which comprises two housing halves that can be mated together. The housing halves are formed with interlocking teeth and recesses along their side edges.

US 6,111,670 discloses a further housing for a mobile communication device. The housing includes a front housing part and a rear housing part, which can be joined together such as by snap-fitting. The rear housing is a concave body having a floor and side walls. A plurality of support ribs are formed on the periphery of the floor. Different layers of electronic components of the mobile device can be supported on the floor and the support ribs, respectively.

It is an object of the present invention to provide a construction of a mobile terminal that prevents deformation of a case of the terminal and subsequent intemal damage that may result from physical impact.

To achieve the above object, the present invention provides a mobile communication terminal according to claim 1. The terminal comprises first casing comprising a primary rib formed parallel and adjacent to a side edge, and a second casing coupled to the first casing, wherein the second casing comprises a plurality of secondary ribs formed along a side edge so that the plurality of secondary ribs engage the primary rib when the second casing is coupled to the first casing. Each secondary rib has formed thereon at least one engaging groove to engage the primary rib when the second casing is coupled to the first casing.

The terminal may further comprise a support wall formed approximately parallel and adjacent to the side edge of the second casing, wherein an inner surface of the support wall is adjacent to the plurality of secondary ribs.

The primary rib may comprise a plurality of support grooves formed thereon, which correspond to the plurality of secondary ribs. Furthermore, the secondary ribs may have their engaging grooves so formed as to engage the plurality of support grooves when the second casing is coupled to the first casing. Also, each support groove may be tapered and formed approximately perpendicular to the primary rib.

The present invention allows to provide a mobile communication terminal with a case that resists deformation and sufficiently tolerates impacts applied in vertical and horizontal directions to a surface of the case. The case may be fabricated at reduced cost and exhibits increased durability.

### Brief Description of the Drawings

The accompanying drawings, which are included to provide a further understanding of the invention and are incorporated in and constitute a part of this specification, illustrate embodiments of the invention and, together with the description, serve to explain the principles of the invention.

In the drawings:
Fig. 1 illustrates a perspective view of a conventional folding-type mobile communication terminal;
Fig. 2 illustrates another view of the conventional folding-type mobile communication terminal of Fig. 1;
Fig. 3 illustrates an enlarged view of Section A of Fig. 2;
Fig. 4 illustrates a partial sectional view of the conventional folding-type mobile communication terminal of Fig. 1;
Fig. 5 illustrates an enlarged view of Section B of Fig. 4;
Fig. 6 illustrates a side view of the conventional folding-type mobile communication terminal of Fig. 1 undergoing a state change from physical impact;
Fig. 7 illustrates a perspective view of a member of a folding-type mobile communication terminal in accordance with a preferred embodiment of the present invention;
Fig. 8 illustrates an enlarged view of Section C of Fig. 7;
Fig. 9 illustrates a sectional view of the member of a folding-type mobile communication terminal in accordance with a preferred embodiment of the present invention;
Fig. 10 illustrates an enlarged view of Section D of Fig. 9;
Fig. 11 illustrates an enlarged view of Section E of Fig. 9;
Fig. 12 illustrates a perspective view of the upper and lower cases of the member prior to coupling, in accordance with a preferred embodiment of the present invention; and
Fig. 13 illustrates a perspective view of the upper and lower cases coupled in accordance with a preferred embodiment of the present invention.

Features, elements, and aspects of the invention that are referenced by the same numerals in different figures represent the same, equivalent, or similar features, elements, or aspects in accordance with one or more embodiments.

### Detailed Description of the Preferred Embodiments

Reference will now be made in detail to one or more embodiments of the invention, examples of which are illustrated in the accompanying drawings.

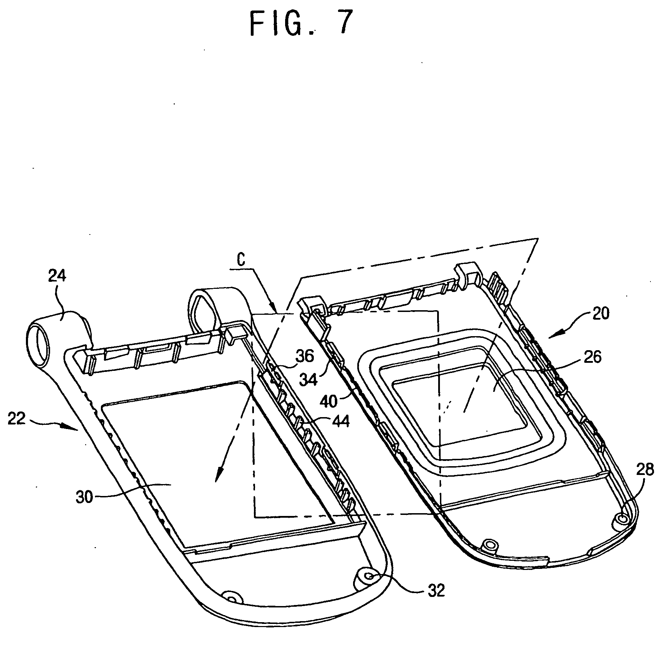

Referring to Fig. 7 a second member of the mobile communication terminal comprises an upper (first) case 20 housing a second display screen (not shown), wherein a user views information displayed in the second display screen through a display window 26. The upper case 20 couples to the lower (second) case 22 to form the second member via screws that protrude through holes 28 in the upper case 20. The screws subsequently engage grooves 32 in the lower case 22. The lower case 22, which forms the inner surface of the second member, includes a hinge unit 24 to rotatably couple the second member to a first member (not shown). The lower case 22 also includes a display window 30, through which a user may view information displayed on the main display screen (not shown).

Within Section C of Fig. 7 are one or more pairs of locking hooks 34 and 36, which are formed on the lateral edges of the upper and lower cases 20 and 22, respectively. When the upper and lower cases 20 and 22 are coupled, the hooks 34 and 36 mutually engage each other to prevent the upper and lower cases 20 and 22 from separating. Preferably, the hooks 34 and 36 mutually engage each other via snap-fit. A primary rib 40 is formed on the lateral edges of the upper case 20 and corresponds to a plurality of secondary ribs 44 formed on the lateral edges of the lower case 22. Preferably, the secondary ribs 44 are formed at equal intervals along the lateral edges of the lower case 22. Due to the plurality of support mechanisms formed on the edges of the upper and lower cases 20, 22, the overall structural strength of the second member of the mobile communication terminal is improved.

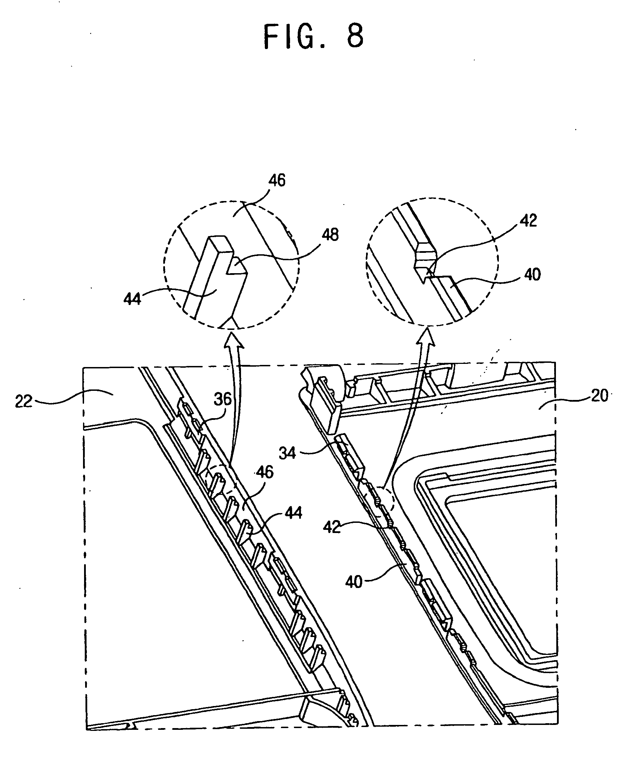

Referring to Fig. 8, which is an enlarged view Section C in Fig. 7, a plurality of support grooves 42 is formed on the primary rib 40. The plurality of support grooves 42 receives the plurality of secondary ribs 44 when the upper and lower cases 20 and 22 are coupled. Preferably, the support grooves 42 are formed at equal intervals that correspond to the intervals between the secondary ribs 42. A support wall 46 is formed on the outer edges of the lower case 22, wherein the secondary ribs 44 are formed adjacent to the support wall 46. In alternative embodiments, the support wall may be integrated into the outer edge of the lower case 22.

An engaging groove 48 is preferably formed on the distal end of each secondary rib 44, wherein the engaging groove 48 is approximately "L" shaped. Accordingly, the vertically portion of each engaging groove 48 is approximately parallel and adjacent to the primary rib 40 when the upper and lower cases 20 and 22 are respectively coupled. Furthermore, the horizontal portion of the engaging groove is approximately perpendicular to the primary rib 40 when engaging the support groove 42. Preferably, the width and depth of the plurality of engaging grooves 48 are approximately equal to the width and depth of the plurality of support grooves 42. In order to facilitate coupling, the support grooves 42 are preferably tapered so that the entrance of each groove 42 is formed wide.

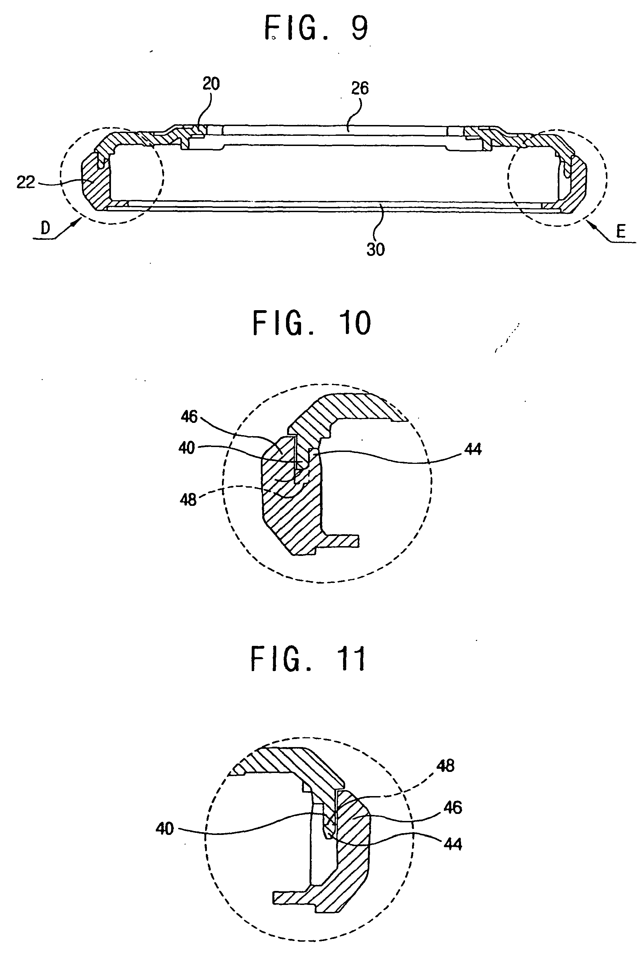

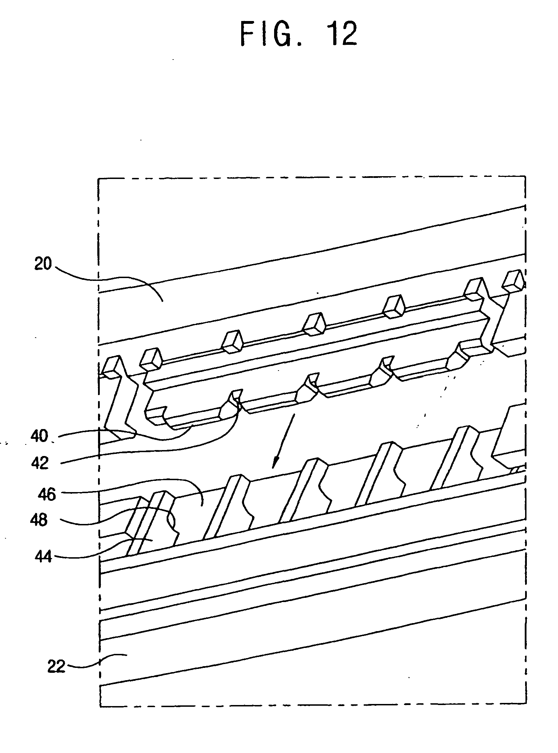

Referring to Fig. 9, a sectional view of the second member of a folding-type mobile communication terminal, in accordance with a preferred embodiment of the present invention, is shown. Particularly, the coupling of the upper and lower cases 20 and 22 can be viewed, wherein the side edges of the cases in Sections D and E are enlarged in Figs. 10 and 11, respectively. Figs. 10 and 11 show alternating views of the primary and secondary ribs 40 and 42, wherein the engaging grooves 48 and the support grooves 42 mutually receive each other.

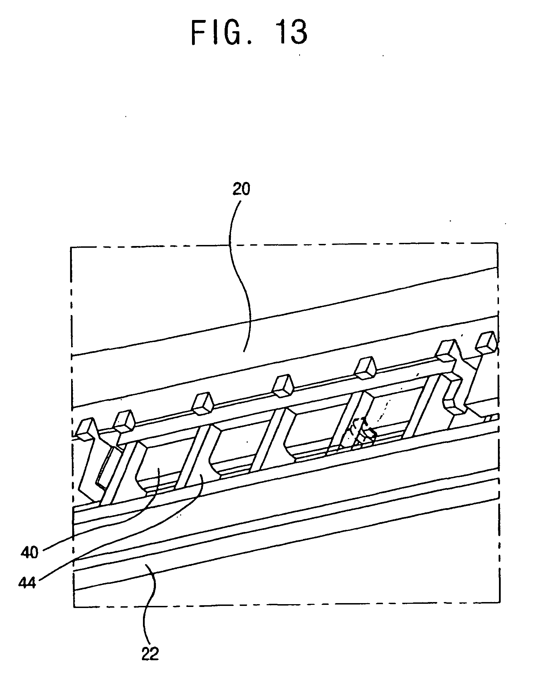

Figs. 12 and 13 illustrate the process of coupling the upper and lower cases 20 and 22 of the second member in accordance with a preferred embodiment of the present invention. As shown in Fig. 12, the upper case 20 is coupled to the lower case, wherein the hooks 34 and 36 mutually engage each other to interlock (not shown). Screws are driven through the holes 28 of the upper case and engage the grooves 32 formed on the lower case 22, thereby securely fastening the upper and lower cases 20 and 22. In Fig. 13, the primary rib 40 is shown to be operatively coupled with the plurality of secondary ribs 44. Furthermore, the relationship between the plurality of support grooves 42 and the plurality of engaging grooves 48 is evidenced by the dotted lines.

Accordingly, a mobile communication terminal having a case constructed according to a preferred embodiment of the present invention would be able to withstand impact forces applied in either or both vertical and horizontal directions. The engagement of the plurality of support grooves 42 and the engaging grooves 48 prevent longitudinal movement of the upper and lower cases 20 and 22 when a longitudinal force (*i.e.,* perpendicular to the upper or lower side edges of either the upper or lower cases 20, 22) is applied. Also, the plurality of secondary ribs 44 provides sufficient strength and durability to withstand the application of a lateral force (*i.e.,* perpendicular to the surface of either the upper or lower cases 20, 22).

The support wall 46 allows for the second member to withstand forces applied to the lateral side edges of the lower case, thereby further preventing the upper and lower cases 20 and 22, respectively, from sliding apart. The support wall eliminates the need to fabricate a relatively fragile support slot, thereby reducing the number of defective units produced and, subsequently, overall fabrication costs.

It will be apparent to those skilled in the art that various modifications and variations can be made in the present Invention without departing from the scope of the invention. Therefore, the foregoing description of these embodiments of the present invention has been presented for the purposes of illustration and description, without the intention to be exhaustive or to limit the invention to the precise form disclosed. The present invention covers the modifications and variations of this invention provided they come within the scope of the appended claims and their equivalents. Preferred embodiments were shown in the context of folding type mobile communication terminals. In alternative embodiments, candy bar type mobile communication terminals, PDA terminals, and pagers can be substituted for the present invention.

## Claims

1. A mobile communication terminal comprising:
- a first casing (20) comprising a primary rib (40) formed parallel and adjacent to a side edge; and
- a second casing (22) coupled to the first casing (20), wherein the second casing (22) comprises a plurality of secondary ribs (44) formed along a side edge so that the plurality of secondary ribs (44) engage the primary rib (40) when the second casing (22) is coupled to the first casing (20),
**characterized in that** each secondary rib (44) comprises at least an engaging groove (48) formed on the secondary rib to engage the primary rib (40) when the second casing (22) is coupled to the first casing (20).

2. The mobile communication terminal of claim 1, further comprising a support wall (46) formed parallel and adjacent to the side edge of the second casing (22), wherein an inner surface of the support wall (46) is adjacent to the plurality of secondary ribs (44).

3. The mobile communication terminal of daim 1, wherein the primary rib (40) comprises a plurality of support grooves (42) formed on the primary rib that correspond to the plurality of secondary ribs (44).

4. The mobile communication terminal of claim 3, wherein the secondary ribs (44) have their engaging grooves (48) so formed as to engage the plurality of support grooves (42) when the second casing (22) is coupled to the first casing (20).

5. The mobile communication terminal of claim 3, wherein each support groove (42) is tapered and is formed perpendicular to the primary rib (40).

6. The mobile communication terminal of claim 3, wherein the plurality of support grooves (42) and the plurality of secondary ribs (44) are placed equidistantly apart.

7. The mobile communication terminal of claim 1, wherein a plurality of hooks (34, 36) is formed on the first and second casings (20, 22) so that a hook (34) of the first casing (20) is operatively coupled with a hook (36) of the second casing (22), when the second casing (22) is coupled to the first casing (20).

8. The mobile communication terminal of claim 1, wherein the terminal is a folding type mobile terminal.

9. The mobile communication terminal of claim 1, wherein the terminal is a bar type mobile terminal.

## Patentansprüche

1. Mobiles Kommunikationsendgerät, umfassend:
- ein erstes Gehäuse (20), das eine zu einer Seitenkante parallel und angrenzend ausgebildete Hauptrippe (40) umfasst; und
- ein zweites Gehäuse (22), das mit dem ersten Gehäuse (20) gekoppelt ist, wobei das zweite Gehäuse (22) eine Vielzahl von Nebenrippen (44) umfasst, die entlang einer Seitenkante so ausgebildet sind, dass die Vielzahl von Nebenrippen (44) sich im Eingriff mit der Hauptrippe (440) befinden, wenn das zweite Gehäuse (22) mit dem ersten Gehäuse (20) gekoppelt ist,
**dadurch gekennzeichnet, dass** jede Nebenrippe (44) mindestens eine Eingriffsnut (48) umfasst, die auf der Nebenrippe ausgebildet ist, um sich im Eingriff mit der Hauptrippe (40) zu befinden, wenn das zweite Gehäuse (22) mit dem ersten Gehäuse (20) gekoppelt ist.

2. Mobiles Kommunikationsendgerät nach Anspruch 1, weiterhin umfassend eine Stützwand (46), die parallel und angrenzend zur Seitenkante des zweiten Gehäuses (22) ausgebildet ist, wobei eine innere Oberfläche der Stützwand (46) an die Vielzahl der Nebenrippen (44) angrenzt.

3. Mobiles Kommunikationsendgerät nach Anspruch 1, wobei die Hauptrippe (40) eine Vielzahl von auf der Hauptrippe ausgebildeten Stütznuten (42) umfasst, die der Vielzahl von Nebenrippen (44) entsprechen.

4. Mobiles Kommunikationsendgerät nach Anspruch 3, wobei die Nebenrippen (44) ihre Eingriffsnute (48) so ausgebildet haben, dass sie sich in Eingriff mit der Vielzahl der Stütznuten (42) befinden, wenn das zweite Gehäuse (22) mit dem ersten Gehäuse (20) gekoppelt ist.

5. Mobiles Kommunikationsendgerät nach Anspruch 3, wobei jede Stütznut (42) konisch ausgebildet und senkrecht zur Hauptrippe (40) ausgebildet ist.

6. Mobiles Kommunikationsendgerät nach Anspruch 3, wobei die Vielzahl der Stütznute (42) und die Vielzahl der Nebenrippen (44) gleich weit voneinander beabstandet sind.

7. Mobiles Kommunikationsendgerät nach Anspruch 1, wobei eine Vielzahl von Haken (34, 36) auf dem ersten und dem zweiten Gehäuse (20, 22) dergestalt ausgebildet sind, dass ein Haken (34) des ersten Gehäuses (20) wirkend mit einem Haken (36) des zweiten Gehäuses (22) gekoppelt ist, wenn das zweite Gehäuse (22) mit dem ersten Gehäuse (20) gekoppelt ist.

8. Mobiles Kommunikationsendgerät nach Anspruch 1, wobei das Endgerät ein mobiles Endgerät von einer klappbaren Art ist.

9. Mobiles Kommunikationsendgerät nach Anspruch 1, wobei das Endgerät ein mobiles Endgerät nach Art eines Riegels ist.

## Revendications

1. Terminal de communication mobile comprenant :
- un premier boîtier (20) comprenant une nervure primaire (40) formée parallèlement et de manière adjacente vis-à-vis d'un bord latéral, et
- un deuxième boîtier (22) couplé au premier boîtier (20), dans lequel le deuxième boîtier (22) comprend une pluralité de nervures secondaires (44) formées le long d'un bord latéral, de sorte que la pluralité de nervures secondaires (44) s'engagent avec la nervure primaire (40) quand le deuxième boîtier (22) est couplé au premier boîtier (20),
**caractérisé en ce que** chaque nervure secondaire (44) comprend une rainure d'engagement (48) formée sur la nervure secondaire, destinée à s'engager avec la nervure primaire (40) quand le deuxième boîtier (22) est couplé au premier boîtier (20).

2. Terminal de communication mobile selon la revendication 1, comprenant en outre une paroi support (46) formée parallèlement et de manière adjacente vis-à-vis du bord latéral du deuxième boîtier (22), dans lequel une surface intérieure de la paroi support (46) est adjacente à la pluralité de nervures secondaires (44).

3. Terminal de communication mobile selon la revendication 1, dans lequel la nervure primaire (40) comprend une pluralité de rainures supports (42) formées sur la nervure primaire, qui correspondent à la pluralité de nervures secondaires (44).

4. Terminal de communication mobile selon la revendication 3, dans lequel les nervures secondaires (44) ont leurs rainures d'engagement (48) formées de manière à s'engager avec la pluralité de rainures supports (42) quand le deuxième boîtier (22) est couplé au premier boîtier (20).

5. Terminal de communication mobile selon la revendication 3, dans lequel chaque rainure support (42) est conique et est formée perpendiculairement à la nervure primaire (40).

6. Terminal de communication mobile selon la revendication 3, dans lequel les rainures support (42) de la pluralité et les nervures secondaires (44) de la pluralité sont placées avec des espacements équidistants.

7. Terminal de communication mobile selon la revendication 1, dans lequel une pluralité de crochets (34, 36) est formée sur les premier et deuxième boîtiers (20, 22) de manière à ce qu'un crochet (34) du premier boîtier (20) soit couplé en fonctionnement avec un crochet (36) du deuxième boîtier (22) quand le deuxième boîtier (22) est couplé au premier boîtier (20).

8. Terminal de communication mobile selon la revendication 1, dans lequel le terminal est un terminal mobile du type pliable.

9. Terminal de communication mobile selon la revendication 1, dans lequel le terminal est un terminal mobile du type barreau.
